# EUROPÄISCHE PATENTSCHRIFT

(11) **EP 3 914 462 B1**
(45) Veröffentlichungstag und Bekanntmachung des Hinweises auf die Patenterteilung: **26.03.2025**
(21) Anmeldenummer: 19835230.4
(22) Anmeldetag: 11.12.2019
(51) Int. Cl.: B60D 1/66, B60D 1/62, B60S 9/14

(54) **VERFAHREN ZUR ÜBERWACHUNG EINER POSITION EINES STÜTZRADES EINES ANHÄNGERS UND EIN KAMERASYSTEM ZUR ÜBERWACHUNG EINER POSITION EINES STÜTZRADES EINES ANHÄNGERS SOWIE EIN KRAFTFAHRZEUG MIT EINEM KAMERASYSTEM**
METHOD FOR MONITORING THE POSITION OF A JOCKEY WHEEL OF A TRAILER, CAMERA SYSTEM FOR MONITORING THE POSITION OF A JOCKEY WHEEL OF A TRAILER, AND MOTOR VEHICLE COMPRISING A CAMERA SYSTEM
PROCÉDÉ DE CONTRÔLE D'UNE POSITION D'UNE ROUE D'APPUI D'UNE REMORQUE, SYSTÈME DE CAMÉRA POUR LE CONTRÔLE D'UNE POSITION D'UNE ROUE D'APPUI D'UNE REMORQUE ET VÉHICULE À MOTEUR COMPORTANT UN SYSTÈME DE CAMÉRA

(30) Priorität: 22.01.2019 DE 102019200753
(43) Veröffentlichungstag der Anmeldung: 01.12.2021
(73) Patentinhaber: Conti Temic microelectronic GmbH, 90411 Nürnberg (DE)
(72) Erfinder: FENDT, Günter Anton, 90411 Nürnberg (DE)
(74) Vertreter: Continental Corporation
(86) Internationale Anmeldenummer: PCT/DE2019/200145
(87) Internationale Veröffentlichungsnummer: WO 2020/151779

(56) Entgegenhaltungen:
- EP-A1- 3 498 548
- DE-A1- 102017 130 139
- DE-B4- 102018 212 963
- US-A1- 2015 345 939
- US-A1- 2018 050 573
- US-A1- 2020 353 864
- US-B2- 10 430 705

## Beschreibung

Die Erfindung betrifft ein Verfahren zur Überwachung einer Position eines Stützrades eines Anhängers und ein Kamerasystem zur Überwachung einer Position eines Stützrades eines Anhängers sowie ein Kraftfahrzeug mit einem Kamerasystem. Das Dokument US 2015345939 A1 offenbart ein Verfahren und ein Kamerasystem zur Überwachung einer Position eines Stützrades.

Heutzutage sind Fahrerassistenzsysteme nicht mehr aus Kraftfahrzeugen wegzudenken. Fahrerassistenzsysteme weisen Funktionen auf, die den Fahrer eines Fahrzeugs beim Fahren unterstützen. Dies wird insbesondere dadurch erreicht, dass das System das Umfeld erfasst bzw. aufzeichnet und die erfassten Informationen verarbeitet und dann entsprechende Fahrmanöver durchführt oder dem Fahrer die Umfeldinformationen wiedergibt. Hierfür kommen insbesondere Kameras zum Einsatz, die zumindest bereichsweise den Raum um das Fahrzeug herum erfassen. Bekannt sind beispielsweise Frontkameras, die im Bereich der Windschutzscheibe angeordnet sind und einen Bereich vor dem Fahrzeug erfassen. Ferner gehören mittlerweile auch nach hinten schauende Kameras, wie Rückfahrkameras, zum Stand der Technik. Diese erfassen insbesondere einen hinter dem Fahrzeug liegenden Bereich. Auch Surround-View-Systeme kommen inzwischen immer häufiger zum Einsatz.

Obwohl heutige Kraftfahrzeuge vermehrt über Anhängerkupplungen verfügen, ist das Ziehen von Anhängern nicht alltäglich. Eine bekannte Nutzung von Anhängern ist der Transport von großen Möbelstücken, insbesondere bei Umzügen. Ferner kommen Anhänger in Form von Wohnmobilen zum Einsatz. Diese Ereignisse erfolgen nur gelegentlich und so liegt eine gewisse Zeit zwischen der Nutzung der Anhänger. Es fehlt somit die Routine, so dass die Befestigung eines Anhängers vielmals fehlerhaft erfolgt, was mit bösen Folgen einhergehen kann.

Damit die Anhänger bei Nichtnutzung einen sicheren Stand haben, weisen Anhänger Stützräder auf. Sind die Anhänger an einem Kraftfahrzeug angeordnet, dann werden die Stützräder hochgefahren und fixiert. Aufgrund von Bodenunebenheiten kann es während der Fahrt dazukommen, dass sich die Stützräder, insbesondere bei nicht sachgerechter Befestigung, lösen. Hierdurch kann das Stützrad beschädigt werden bzw. schlimmstenfalls kann dies zu einer Verkehrsgefährdung führen.

Ausgehend hiervon ist es nun Aufgabe der Erfindung, ein Verfahren bzw. ein System bereitzustellen, mit dem ein Ziehen eines Anhängers sicher und insbesondere unfallfrei vonstattengehen kann.

Die Aufgabe wird durch ein Verfahren mit den Merkmalen des unabhängigen Patentanspruchs 1 gelöst. Bevorzugte Ausführungsformen sind Gegenstand der Unteransprüche. Ein Kamerasystem sowie ein Kraftfahrzeug sind Gegenstände der nebengeordneten Patentansprüche.

Gemäß einem ersten Aspekt bezieht sich die vorliegende Erfindung auf ein Verfahren zur Überwachung einer Position eines Stützrades eines Anhängers mit den Schritten:
- Erfassen eines hinter einem Kraftfahrzeug liegenden Bereichs mit einer Kamera,
- Verarbeiten der erfassten Bilddaten mit einer Auswerteeinheit und Erkennen des Stützrades sowie Bestimmen einer Position des Stützrades,
- Vergleichen der erfassten Position des Stützrades mit einer sicheren Position des Stützrades,
- Ausgeben eines Warnsignals, wenn die erfasste Position des Stützrades von der sicheren Position abweicht.

Das erfindungsgemäße Verfahren sorgt insbesondere dafür, dass die Position eines Stützrades eines Anhängers überwacht wird, bevorzugt kontinuierlich während einer Fahrt. Ändert sich die Position des Stützrades, dann wird der Fahrer darüber informiert. Der Fahrer kann so vor der Entstehung einer Unfallgefährdung bzw. vor einer Beschädigung des Stützrades entsprechende Maßnahmen ergreifen. Der Fahrer kann beispielsweise das Kraftfahrzeug stoppen und das Stützrad wieder befestigen. Hierdurch kann insgesamt ein sicheres Ziehen eines Anhängers erreicht werden.

Die Erkennung des Stützrades erfolgt insbesondere mit einer in der Bildverarbeitung bekannten Objekterkennungsmethode.

Die Ausgabe des Warnsignals kann optisch und/oder akustisch erfolgen. Von Vorteil ist es, wenn der Fahrer auf einer Anzeigeeinrichtung, insbesondere auf einem Monitor und/oder einem Head-Up Display über die Position des Stützrades informiert wird. Von Vorteil ist es, wenn dem Fahrer zumindest ein Bildausschnitt der Kamera dargestellt wird, wobei Überlagerungen bzw. Hervorhebungen, die insbesondere farblich ausgebildet sind, eingeblendet werden, wenn die Position des Stützrades von der sicheren Position abweicht. Dies sorgt dafür, dass der Fahrer einfach und gut erkennbar über eine Fehlposition des Stützrades informiert wird.

Denkbar ist, dass eine mehrstufige Warnung erfolgen kann. Weicht das Stützrad nur unwesentlich von der sicheren Position ab, dann kann ein alternierender Ton bzw. ein alternierendes Piepen erfolgen. Weicht die Position des Stützrades immer mehr von der sicheren Position ab, dann kann das akustische Signal in einen Dauerton bzw. ein Dauerpiepen übergehen. Ebenso kann sich die optische Warnung verändern, insbesondere ergeht ein Farbwechsel. Bevorzugt erfolgt ein Farbwechsel in der Hervorhebung bzw. Überlagerung. Besonders bevorzugt erfolgt der Farbwechsel von gelb über orange nach rot hin.

In einer bevorzugten Ausgestaltung erfolgt die Ausgabe des Warnsignals erst, wenn zwischen der erfassten Position des Stützrades von der sicheren Position ein Abstand bzw. eine Differenz vorliegt, der einen Schwellwert übersteigt.

Mit sicherer Position wird im Sinne der Erfindung insbesondere eine Position des Stützrades verstanden, bei der während des Betriebs des Kraftfahrzeugs keine Beschädigung am Stützrad erfolgen sollte. Das Stützrad befindet sich insbesondere in der sicheren Position, wenn es ausreichend entfernt von der Fahrbahn angeordnet ist. In einer vorteilhaften Ausgestaltung der vorliegenden Erfindung handelt es sich bei der sicheren Position um einen definierten Abstand zwischen dem Stützrad in der sicheren Position, insbesondere in einer Soll-Position, und der Fahrbahn. Im Sinne der Erfindung wird der definierte Abstand insbesondere als ein Sollabstand gesehen. Der Sollabstand wird bevorzugt hinterlegt.

In einer bevorzugten Ausgestaltung wird ein Warnsignal ausgegeben, wenn der Abstand des erfassten Stützrades zur Fahrbahn geringer ist als der definierte Abstand. Von Vorteil ist es, wenn das Warnsignal erst dann ausgegeben wird, wenn der Abstand des erfassten Stützrades von dem definierten Abstand um einen Schwellwert bzw. eine Differenz abweicht. Der Schwellwert ist bevorzugt im System hinterlegt. Hierbei ist vorteilhaft, dass der Fahrer nicht schon bei der kleinesten Abweichung eine Warnung erhält, obwohl noch kein Gefahrpotential vorliegt. Bevorzugt ist der sichere Abstand des Stützrades und/oder der Sollabstand und/oder der Schwellwert in einer Speichereinheit hinterlegt und kann abgerufen werden.

Von Vorteil ist es, wenn eine Überprüfung durchgeführt wird, ob ein Anhänger vorhanden ist. Die Überprüfung kann mit einer Kamera, insbesondere einer Rückfahrkamera, mittels Auswertung einer elektrischen Kontaktierung und/oder mit einer Anhängerkupplung-Stützlasterkennung erfolgen. Ist ein Anhänger erkannt worden, dann wird insbesondere die Kamera aktiviert.

Bevorzugt wird das erfindungsgemäße Verfahren dann nur durchgeführt, wenn sich das Kraftfahrzeug in Bewegung befindet. Es ist auch möglich, dass das Verfahren aktiviert wird, wenn der Motor des Kraftfahrzeugs gestartet wird.

Gemäß einem zweiten Aspekt bezieht sich die Erfindung auf ein Kamerasystem zur Überwachung einer Position eines Stützrades eines Anhängers mit zumindest einer Kamera, die einen hinter einem Kraftfahrzeug befindlichen Bereich erfasst; mit einer Auswerteeinheit zur Verarbeiten der erfassten Bilddaten, wobei die Auswerteeinheit derart ausgebildet ist, dass das Stützrades erkannt und eine Position des Stützrades bestimmt wird; mit einer Vergleichseinrichtung, die derart ausgebildet ist, dass die erfasste Position des Stützrades mit einer sicheren Position des Stützrades verglichen wird; und mit einer Warneinrichtung zur Ausgabe eines Warnsignals, wenn die erfasste Position des Stützrades von der sicheren Position abweicht.

Das erfindungsgemäße System sorgt insbesondere für ein sicheres Ziehen eines Anhängers. Gerade für Personen, die nur unregelmäßig einen Anhänger ziehen, kann mit dem erfindungsgemäßen System unnötigem Ärger vorgebeugt werden.

In einer bevorzugten Ausgestaltung kann das System eine Speichereinheit umfassen. In der Speichereinheit ist die sichere Position und/oder ein Sollabstand und/oder ein Schwellwert hinterlegt. Die Speichereinheit kann dabei Teil der Auswerteeinheit sein. Es ist auch denkbar, dass die Vergleichseinheit Teil der Auswerteeinheit ist.

Vorteilhafterweise handelt es sich bei der Kamera um eine Rückfahrkamera. Hierdurch erlangt der Fahrer einen Mehrwert, da eine bereits am Kraftfahrzeug vorhandene Kamera mit einem nur recht begrenzten Aufgabenbereich eine Zusatzfunktion erhält. Es ist aber grundsätzlich auch möglich, dass die Kamera eine Kamera eines Surround-View-Systems ist, die insbesondere in einem Heckbereich des Kraftfahrzeugs angeordnet ist.

Das erfindungsgemäße Kamerasystem eignet sich insbesondere zur Durchführung eines erfindungsgemäßen Verfahrens.

Gemäß einem dritten Aspekt bezieht sich die Erfindung auf ein Kraftfahrzeug aufweisend ein erfindungsgemäßes Kamerasystem.

Weitere vorteilhafte Ausgestaltungen ergeben sich aus den Zeichnungen. Hierbei zeigen:
- Fig. 1:: schematische Darstellung eines Ablaufdiagramms eines erfindungsgemäßen Verfahrens zur Überwachung einer Position eines Stützrades eines Anhängers in einer Ausgestaltung;
- Fig. 2:: schematische Darstellung eines Kraftfahrzeugs mit einem erfindungsgemäßen Kamerasystem in einer Ausgestaltung;
- Fig. 3:: schematische Darstellung eines Kraftfahrzeugs mit einem erfindungsgemäßen Kamerasystem in einer weiteren Ausgestaltung.

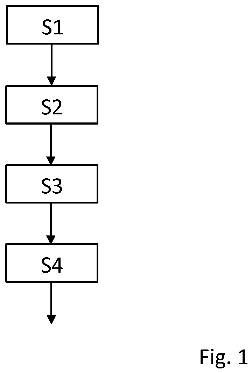

Figur 1 zeigt eine schematische Darstellung eines Ablaufdiagramms eines erfindungsgemäßen Verfahrens zur Überwachung einer Position eines Stützrades 18 eines Anhängers 16 in einer Ausgestaltung. In einem ersten Schritt S1 wird ein hinter einem Kraftfahrzeug 12 liegender Bereich mit einer Kamera 14 erfasst. In einem zweiten Schritt S2 werden die erfassten Bilddaten der Kamera 14 mit einer Auswerteeinheit 22 ausgewertet. Es erfolgt die Erkennung des Stützrades 18 sowie die Bestimmung einer Position des Stützrades 18. Zur Erkennung des Stützrades 18 können bekannte Objekterkennungsmethoden herangezogen werden. In einem dritten Schritt wird die erfasste Position des Stützrades 18 mit einer sicheren Position des Stützrades 18 verglichen. Bei der sicheren Position kann es sich um einen Abstand zwischen dem Stützrad 18 in einer sicheren Position, insbesondere in einer Sollposition, und der Fahrbahn 30 handeln. Der Abstand ist bevorzugt in einer Speichereinheit 28 hinterlegt. In einem vierten Schritt S4 wird ein Warnsignal ausgeben, wenn die erfasste Position des Stützrades 18 von der sicheren Position abweicht. Das Warnsignal wird bevorzugt nur dann ausgegeben, wenn der Abstand des erfassten Stützrades 18 zur Fahrbahn 30 geringer ist als der Sollabstand ist und um einen Schwellwert von dem sicheren Abstand abweicht.

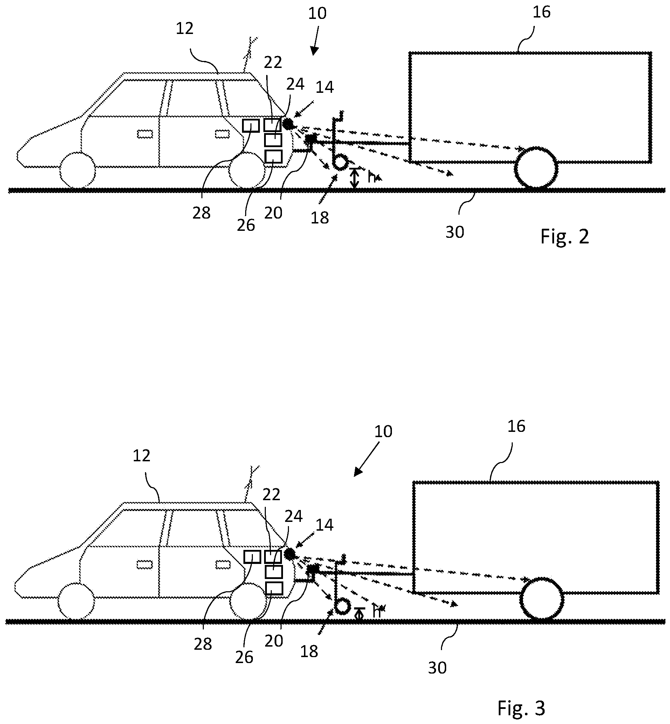

Figur 2 zeigt eine schematische Darstellung eines Kraftfahrzeugs 12 mit einem erfindungsgemäßen Kamerasystem 10 zur Überwachung einer Position eines Stützrades 18 eines Anhängers 16 in einer Ausgestaltung. Das Kamerasystem 10 weist eine Kamera 14 auf, die einen hinter einem Kraftfahrzeug 12 befindlichen Bereich erfasst. Der Erfassungsbereich der Kamera 14 ist in Figur 2 durch die gestrichelten Pfeile dargestellt. Ferner weist das Kamerasystem 10 eine Auswerteeinheit 22 auf. Die Auswerteeinheit 22 verarbeitet die erfassten Bilddaten. Hierdurch kann das Stützrades 18 erkannt und seine Position bestimmt werden. Ferner umfasst das System 10 eine Vergleichseinrichtung 24. Die Vergleichseinrichtung 24 vergleicht die erfasste Position des Stützrades 18 mit einer sicheren Position des Stützrades 18. Die sichere Position des Stützrades 18 ist bevorzugt in einer Speichereinheit 28 hinterlegt. Des Weiteren umfasst das System 10 eine Warneinrichtung 26 zur Ausgabe eines Warnsignals, wenn die erfasste Position des Stützrades 18 von der sicheren Position abweicht.

In Figur 2 weist das erfasste Stützrad 18 einen Abstand h von der Fahrbahn 30 auf. Der Abstand entspricht im Wesentlichen einem in der Speichereinheit 28 hinterlegten Sollabstand. Es besteht somit während dem Betrieb des Kraftfahrzeugs 12 keine Gefährdung durch das Stützrad 18, so dass eine Warnung hier nicht ergeht.

Figur 3 zeigt eine schematische Darstellung eines Kraftfahrzeugs 12 mit einem erfindungsgemäßen Kamerasystem 10 in einer weiteren Ausgestaltung. Das in Figur 3 dargestellte System 10 entspricht prinzipiell dem in Figur 2 dargestellten System 10. Lediglich die Position des Stützrades 18 unterscheidet sich voneinander. In Figur 3 weist das Stützrad 18 einen Abstand h' von der Fahrbahn 30 auf. Der Abstand h' ist geringer als der hinterlegte Sollabstand, insbesondere weicht der Abstand h' von dem Sollabstand um einen Schwellwert ab. Die Warneinrichtung 26 gibt somit ein Warnsignal aus.

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird. Auch eine Kombination der verschiedenen Ausführungsbeispiele ist möglich.

### Bezugszeichenliste

- 10: Kamerasystem
- 12: Kraftfahrzeug
- 14: Rückfahrkamera
- 16: Anhänger
- 18: Stützrad
- 20: Anhängerkupplung
- 22: Auswerteeinheit
- 24: Vergleichseinrichtung
- 26: Warneinrichtung
- 28: Speichereinheit
- 30: Fahrbahn
- h, h': Höhe Stützrad vom Boden
- S1-S4: Verfahrensschritte

## Patentansprüche

1. Verfahren zur Überwachung einer Position eines Stützrades (18) eines Anhängers (16) mit den Schritten:
- Erfassen (S1) eines hinter einem Kraftfahrzeug (12) liegenden Bereichs mit einer Kamera (14),
- Verarbeiten (S2) der erfassten Bilddaten mit einer Auswerteeinheit (22) und Erkennen des Stützrades (18) sowie Bestimmen einer Position des Stützrades (18),
**gekennzeichnet durch** die Schritte:
- Vergleichen (S3) der erfassten Position des Stützrades (18) mit einer sicheren Position des Stützrades (18),
- Ausgeben (S4) eines Warnsignals, wenn die erfasste Position des Stützrades (18) von der sicheren Position abweicht.

2. Verfahren nach Anspruch 1, **dadurch gekennzeichnet, dass** es sich bei der sicheren Position um einen definierten Abstand zwischen dem Stützrad (18) und einer Fahrbahn (30) handelt.

3. Verfahren nach Anspruch 2, **dadurch gekennzeichnet, dass** ein Warnsignal ausgegeben wird, wenn der Abstand des erfassten Stützrades (18) zur Fahrbahn (30) geringer ist als der definierte Abstand.

4. Verfahren nach einem der vorangehenden Ansprüche, **dadurch gekennzeichnet, dass** die sichere Position des Stützrades (18) in einer Speichereinheit (28) hinterlegt ist und diese abgerufen wird.

5. Verfahren nach einem der vorangehenden Ansprüche, **dadurch gekennzeichnet, dass** eine Überprüfung durchgeführt wird, ob ein Anhänger (16) vorhanden ist.

6. Kamerasystem (10) zur Überwachung einer Position eines Stützrades (18) eines Anhängers (16), insbesondere zur Durchführung eines Verfahrens nach einem der vorangehenden Ansprüche, mit zumindest einer Kamera (14), die einen hinter einem Kraftfahrzeug (12) befindlichen Bereich erfasst, mit einer Auswerteeinheit (22) zur Verarbeiten der erfassten Bilddaten, wobei die Auswerteeinheit (22) derart ausgebildet ist, dass das Stützrades (18) erkannt und eine Position des Stützrades (18) bestimmt wird, **gekennzeichnet durch** eine Vergleichseinrichtung (24), die derart ausgebildet ist, dass die erfasste Position des Stützrades (18) mit einer sicheren Position des Stützrades (18) verglichen wird, und mit einer Warneinrichtung (26) zur Ausgabe eines Warnsignals, wenn die erfasste Position des Stützrades (18) von der sicheren Position abweicht.

7. Kamerasystem (10) nach Anspruch 6, **gekennzeichnet durch** eine Speichereinheit (28), in der die sichere Position, insbesondere ein Sollabstand zwischen Stützrad (18) und einer Fahrbahn (30), hinterlegt ist.

8. Kamerasystem nach einem der Ansprüche 6 oder 7, **dadurch gekennzeichnet, dass** die Kamera (14) eine Rückfahrkamera ist.

9. Kraftfahrzeug (12) aufweisend ein Kamerasystem (10) nach einem der Ansprüche 6 bis 8.

## Claims

1. Method for monitoring a position of a jockey wheel (18) of a trailer (16), having the steps of:
- capturing (S1) an area behind a motor vehicle (12) using a camera (14),
- processing (S2) the captured image data using an evaluation unit (22) and detecting the jockey wheel (18) and determining a position of the jockey wheel (18),
**characterized by** the steps of:
- comparing (S3) the captured position of the jockey wheel (18) with a safe position of the jockey wheel (18),
- outputting (S4) a warning signal if the captured position of the jockey wheel (18) deviates from the safe position.

2. Method according to Claim 1, **characterized in that** the safe position is a defined distance between the jockey wheel (18) and a road (30).

3. Method according to Claim 2, **characterized in that** a warning signal is output if the distance between the captured jockey wheel (18) and the road (30) is less than the defined distance.

4. Method according to one of the preceding claims, **characterized in that** the safe position of the jockey wheel (18) is stored in a storage unit (28) and is retrieved.

5. Method according to one of the preceding claims, **characterized in that** a check as to whether a trailer (16) is present is carried out.

6. Camera system (10) for monitoring a position of a jockey wheel (18) of a trailer (16), in particular for carrying out a method according to one of the preceding claims, having at least one camera (14) that captures an area behind a motor vehicle (12), having an evaluation unit (22) for processing the captured image data, wherein the evaluation unit (22) is designed such that the jockey wheel (18) is detected and a position of the jockey wheel (18) is determined, **characterized by** a comparison device (24) which is designed such that the captured position of the jockey wheel (18) is compared with a safe position of the jockey wheel (18), and having a warning device (26) for outputting a warning signal if the captured position of the jockey wheel (18) deviates from the safe position.

7. Camera system (10) according to Claim 6, **characterized by** a storage unit (28), in which the safe position, in particular a target distance between the jockey wheel (18) and a road (30), is stored.

8. Camera system according to either of Claims 6 and 7, **characterized in that** the camera (14) is a reversing camera.

9. Motor vehicle (12) comprising a camera system (10) according to one of Claims 6 to 8.

## Revendications

1. Procédé permettant de surveiller une position d'une roue d'appui (18) d'une remorque (16), comprenant les étapes consistant à :
- détecter (S1) à l'aide d'une caméra (14) une zone située derrière un véhicule automobile (12),
- traiter (S2) les données d'image détectées avec une unité d'évaluation (22) et reconnaître la roue d'appui (18), ainsi que déterminer une position de la roue d'appui (18),
**caractérisé par** les étapes consistant à :
- comparer (S3) la position détectée de la roue d'appui (18) avec une position sûre de la roue d'appui (18),
- sortir (S4) un signal d'avertissement si la position détectée de la roue d'appui (18) diffère de la position sûre.

2. Procédé selon la revendication 1, **caractérisé en ce que** la position sûre est une distance définie entre la roue d'appui (18) et une chaussée (30).

3. Procédé selon la revendication 2, **caractérisé en ce qu'**un signal d'avertissement est émis si la distance de la roue d'appui détectée (18) par rapport à la chaussée (30) est inférieure à la distance définie.

4. Procédé selon l'une quelconque des revendications précédentes, **caractérisé en ce que** la position sûre de la roue d'appui (18) est sauvegardée dans une unité de mémoire (28) et qu'elle est récupérée.

5. Procédé selon l'une quelconque des revendications précédentes, **caractérisé en ce qu'**une vérification est effectuée si une remorque (16) est présente.

6. Système de caméra (10) permettant de surveiller une position d'une roue d'appui (18) d'une remorque (16), en particulier pour exécuter un procédé selon l'une quelconque des revendications précédentes, comprenant au moins une caméra (14) qui détecte une zone se trouvant derrière un véhicule automobile (12), comprenant une unité d'évaluation (22) pour traiter les données d'image détectées, dans lequel l'unité d'évaluation (22) est réalisée de telle sorte que la roue d'appui (18) est reconnue et une position de la roue d'appui (18) est déterminée, **caractérisé par** un dispositif de comparaison (24) qui est réalisé de telle sorte que la position détectée de la roue d'appui (18) est comparée avec une position sûre de la roue d'appui (18), et comprenant un dispositif d'avertissement (26) pour émettre un signal d'avertissement si la position détectée de la roue d'appui (18) est différente de la position sûre.

7. Système de caméra (10) selon la revendication 6, **caractérisé par** une unité de mémoire (28) dans laquelle est sauvegardée la position sûre, en particulier une distance de consigne, entre la roue d'appui (18) et la chaussée (30).

8. Système de caméra selon l'une quelconque des revendications 6 ou 7, **caractérisé en ce que** la caméra (14) est une caméra de recul.

9. Véhicule automobile (12) présentant un système de caméra (10) selon l'une quelconque des revendications 6 à 8.
